# EUROPEAN PATENT APPLICATION

(11) **EP 4 478 350 A1**
(43) Date of publication of application: **18.12.2024**
(21) Application number: 23382581.9
(22) Date of filing: 12.06.2023
(51) Int. Cl.: G10L 15/22

(54) **VOICE CONTROL MODULE**

(71) Applicant: Simon, S.A.U., 08013 Barcelona (ES)
(72) Inventor: Paradells Aspas, Josep, 08013 Barcelona (ES)
(74) Representative: Balder IP Law, S.L.

(57) **Abstract**

Voice control system, comprising several modules provided with communication means wherein at least one of the modules is a voice control module comprising sound capture means (101), processing units, configured to analyse the captured sound and identify if it corresponds to noise and/or voice, the voice including a vocal activity, a keyword and/or a command; and, in response to each identification, measuring a volume of the identified voice and/or identified noise, the system being configured to determine a command from the voice identifications and determine the electrical load/s or electronic device to which the command is directed from the volume measurements; the given command and the voice and/or noise identifications of the modules.

## Description

### Technical field

The present invention relates to a voice control system and to a voice control module. The voice control system is adapted to determine commands and to determine the electric load/s and/or electronic devices to which the command is directed and comprises at least one voice control module. The voice control module is adapted and configured to detect/capture voice and is capable of being installed/arranged in an electrical device, such as an electrical switch (for example, a light switch or key), an intensity dimmer, a lighting element, a temperature regulator, a blind or a blind switch, among others.

### Background of the invention

Voice control systems that receive voice commands from one or more devices are known but are not capable of knowing the device to be controlled unless its identification appears in the command (for example "turn on the light on the dining room table "), which means that the system configuration must be complex, any of the devices to be controlled must be perfectly labelled, and the command is long and therefore prone to have errors in the syntax and in the interpretation of the command.

On the other hand, the document US 2017243586-A1 discloses methods, systems and apparatus for detecting, processing and responding to audio signals, including voice signals, within a designated area or space. A platform, for multiple multimedia devices connected via a network, is configured to process speech or voice commands and respond by making the multimedia devices to simultaneously perform one or more requested actions. The platform is capable of scoring the quality of a voice request, managing voice requests from multiple platform endpoints using a centralized processing approach, a decentralized processing approach or a combination thereof, and also manipulating the partial processing of voice requests from multiple endpoints into a coherent whole when necessary.

Likewise, from the documents CN 107622652-A and CN 107622767-A other voice control methods are known to operate/control domestic appliances.

However, these solutions are not optimal from the point of view of the use of the information obtained from the user from the sensor devices.

### Brief description of the invention

The present invention is about a voice control system which comprises at least two modules provided with communication means, wherein at least one of the modules is a voice control module comprising:
- sound capture means including at least one microphone for continuously capturing sound;
- one or more processing units configured to:
   analyse the captured sound and identify if it corresponds to noise and/or voice, wherein the voice includes a vocal activity, a keyword and/or a command; and
   ,in response to each identification, measuring a volume of the identified voice and/or the identified noise;
- storage means configured to store, at least temporarily, the captured sound or the identified voice and/or the identified noise;
and wherein the system is configured to determine a command from the voice identifications and determine the electrical load/s or electronic device to which the command is directed from:
- the volume measurements;
- the determined command; and
- the voice and/or noise identifications of the modules.

The electrical loads can be, for example, a relay, a motor, a contactor or a high-power relay, to activate lights, blinds, or the like. And the electronic devices can be, for example, dishwashers, televisions, air conditioning/heating systems, lighting systems (DALI, KNX...), access control systems or the like.

The invention also provides a voice control module with: sound capture means, including at least one microphone, for continuously capturing sound; one or more processing units configured to analyse, particularly continuously, the captured sound and identify whether it corresponds to noise and/or voice, wherein the voice may include a vocal activity, a keyword and/or a command to activate electrical load/s or electronic device/s and in response to each identification, measure the volume of the identified voice and/or identified noise; one or more storage means, for example one or more memories, configured to store, at least temporarily, the captured sound and/or the identified voice and/or the identified noise; and a means of communication with one or more modules.

Therefore, the proposed system and module responds to the deficiencies of the state of the art by optimizing the use of the physical characteristics of the command itself, in particular the volume, to know the location of the user and use this information to know the device or devices to which the command is directed and avoids the need to implement presence detectors or more complex sensors intended to provide data to estimate their location.

In an example of preferred embodiment, the proposed voice control module is installed/arranged in an electrical switch. Alternatively, in other embodiment examples, the proposed voice control module is installed in other electrical devices, such as a dimmer, a lighting element, a temperature regulator, a blind, a blind regulator, among others.

According to the present invention, the voice control module can be connected to a gateway device (or *Gateway)* and/or to a computing server, preferably located in the cloud. Alternatively or in addition, the voice control module can be directly connected to the device that contains the electrical load/s or the electronic device, for example, a lighting element, a blind controller, among others, for the control/operation of the same. Alternatively or in addition, the control module can be connected to another or other control modules.

Examples of commands to control/operate electrical loads or electronic devices can be "open the light", "turn off the light", "raise the temperature to 21 degrees", "lower the blind", "turn on the television on channel 33 ", etc.

The processing unit/units can be implemented or be part of the same unit/means of the voice control module. Alternatively, this/these can be implemented or be part of different units/means of the voice control module. Therefore the processing unit/s may be common to more than one voice control module.

Likewise, the storage means can be associated with or form part of the sound capture means and/or be associated with the processing unit/units.

In some embodiments, the storage media can compress the captured sound or identified voice and/or identified noise.

In some embodiment examples, the identification of the keyword is performed by executing at least one neural network, for example, a convolutional neural network.

In some embodiment examples, the processing unit/s is/are furthermore configured to receive noise and/or voice identifications and volume measurements made by other voice control modules and to decide whether to provide an indication to the electrical load/s or electronic device/s based on the information received and their own identification and volume measurements.

In some embodiment examples, the voice control module further comprises light means (for example, one or more LEDs) that turn on or off in response to a keyword or command identification performed.

In some embodiment examples, the sound capture means include an analog-to-digital converter.

In some embodiment examples, the voice control module further comprises means for temporarily inhibiting the sound capture means. In some embodiment examples, these temporary inhibition means for the sound capture can be a switch that, when activated, deactivates the microphone/s to prevent the sound capture. Preferably, this switch is tactile and can be implemented in the electrical device in which the voice control module is implemented.

### Brief description of the drawings

The foregoing and other features and advantages will be more fully understood from the following detailed description of some embodiment examples, merely illustrative and nonlimiting, with reference to the accompanying drawings, wherein:
Fig. 1 schematically shows the proposed voice control module, according to an embodiment of the present invention.
Figs. 2A and 2B show some embodiments of the communication of the voice control module with a gateway device and with a computer server.
Fig. 3 shows another embodiment where the voice control module is connected as in the embodiment of Figs. 2A and 2B with a gateway device and with a computing server.
Fig. 4 shows another embodiment where the proposed voice control module is connected to a gateway device.
Fig. 5 shows another embodiment where the proposed voice control module is connected with other voice control modules in a distributed system.
Fig. 6 shows another embodiment where the proposed voice control module is connected to other voice control modules in a distributed system connected to a gateway device.
Fig. 7 schematically shows a voice control module according to another embodiment of the present invention.

### Detailed description of the invention and embodiments

The present invention is about a voice control system which comprises at least two modules provided with communication means, wherein at least one of the modules is a voice control module (100) comprising:
- sound capture means (101) including at least one microphone for continuously capturing sound;
- one or more processing units configured to:
   analyse the captured sound and identify if it corresponds to noise and/or voice, wherein the voice includes a vocal activity, a keyword and/or a command; and
   in response to each identification measuring a volume of the identified voice and/or identified noise;
- storage means (104) configured to store, at least temporarily, the captured sound or the identified voice and/or the identified noise;
and wherein the system is configured to determine a command from the voice identifications and determine the electrical load/s or electronic device/s to which the command is directed from:
- the volume measurements:
- the determined command; and
- the voice and/or noise identifications of the modules.

The present invention also provides a voice control module (100) that can be installed/arranged in an electrical device, for example, an electrical switch (for example, a light switch or button), lighting fixture, dimmer, temperature regulator, or even in a blind or blind switch and can be arranged in an electronic device, for example a household appliance, such as a television, a washing machine, or for example a lighting system or a access control system. In this way, the voice control module (100) can be used to activate/control/operate or assist in the process of activation/control/operation of electrical load/s or electronic device/s by detecting/capture and analysis of voice commands.

The voice control module (100) can be made up of several units/means, depending on the desired utility/connectivity.

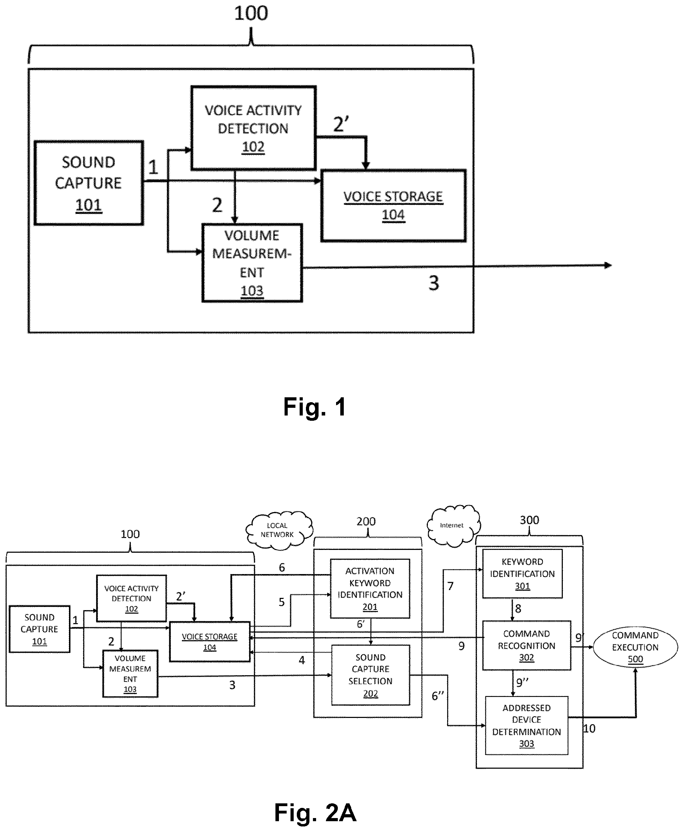

Referring to Fig. 1, a first embodiment example of the proposed voice control module (100) is shown. According to this example, the voice control module (100) comprises or is made up of sound capture means (101), with one or more microphones and with the corresponding analog-digital converters. Particularly, according to the present invention, sound is constantly captured, as a user can generate an activation keyword or a command for control/operation of said electrical load/s or electronic device/s whenever.

The voice control module (100) also includes one or more processing units or CPUs. In this particular case, a CPU implements voice activity detection means (102) and the same CPU implements volume measurement means (103). In this embodiment example, the voice activity detection means (102) execute a software that is capable of identifying whether there is a voice in the captured sound. This functionality performs the first step to identify the activation keyword or voice command given by the user. The volume measurement means (103) run a software that is capable of measuring the volume at any time, for instance, when the sound is identified as voice and when it is considered that there is no voice (noise). It should be noted that, in other embodiments, the voice activity detection means (102) and the volume measurement means (103) can be distributed and form part of different CPUs. Therefore, the invention can be implemented on a single CPU or on multiple CPUs.

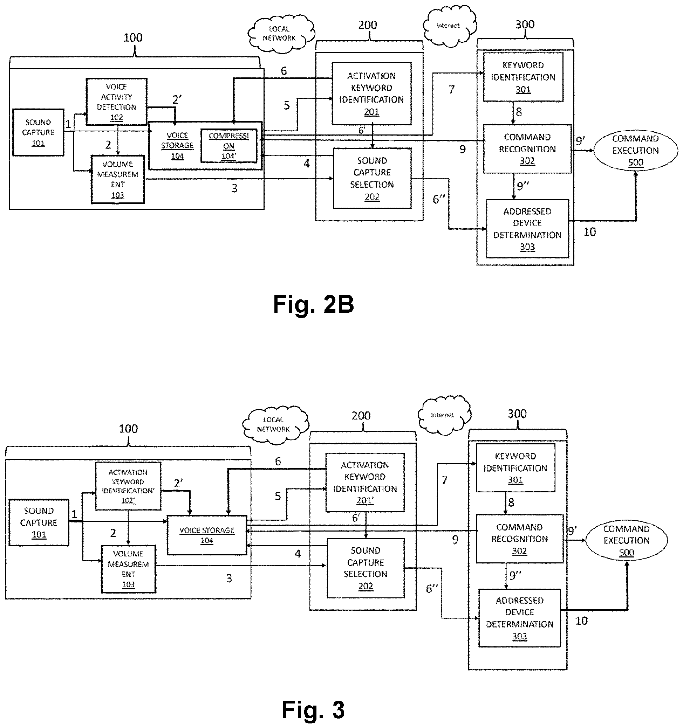

Likewise, although it is not shown in Fig. 1, for sake of simplicity, the voice control module (100) also includes means of communication, preferably wireless, for its communication with a gateway device (see item 200 in Figs 2A and/or 2B), with a computer server (see item 300 in Figs 2A and/or 2B), with another voice control module located in the home, office or space where the voice control module (100) is installed/arranged, or even to connect directly with a device that contains the aforementioned electrical load/s or with an electronic device.

The voice control module (100) also includes one or more storage means (104), for instance, one or more memories. The storage means may be included in the sound capture means (101) and/or in the voice activity detection means (102).

Referring now to Fig. 2A, it shows an embodiment example of a system in which the voice control module (100) of Fig. 1 interacts or communicates with a gateway device (200) and with a computer server (300). It should be noted that the gateway device (200) and the computing server (300) can connect, or establish communication, with different voice control modules (100), sequentially or simultaneously. According to this embodiment, the voice control module (100) comprises sound capture means (101) that continuously capture the sound and transform it into a digital stream that is sent (interaction 1) to a voice detection means (102) capable of recognizing if the captured sound corresponds to voice. Likewise, the digital stream corresponding to the captured sound is sent to a volume measurement means (103) that measure the sound level (that is, its volume) and store the latest values, and also this digital stream of captured sound is sent to a voice storage means (104).

When voice activity is detected, the voice detection means (102) notify it (interaction 2) to the volume measurement means (103) so that they store and send the noise volume prior to the voice identification and the volume corresponding to the identified voice. The volume measurement means (103) measure the volume of the ambient sound on a regular basis and calculate a noise level with the average of the last measurements. Said noise level is also updated regularly as new measurements are obtained.

The volume measurement means (103), upon receiving the voice identification signal, store the last noise level, which can be the last sound volume measurement before the voice detection or an average of the last volume measurements prior to the voice detection. At the same time, the volume measurement means (103) upon receiving the voice identification signal, measure and store the volume of the sound corresponding to the voice identification, identifying it as voice volume.

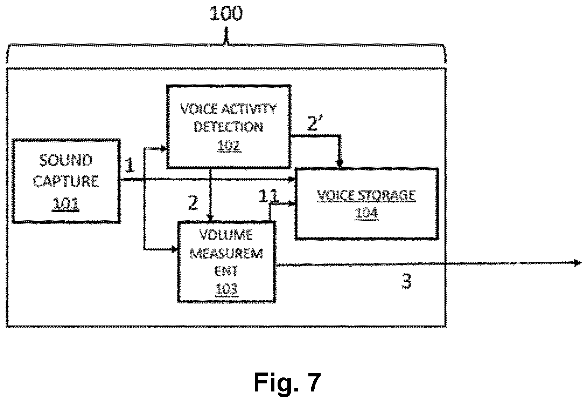

In some embodiments, as can be seen in Fig. 7, the volume measurement means (103) can continue measuring the volume of the sound that reaches it from the sound capture means (101) after the voice identification and compare it with the volume identified as noise volume; if the measured volume is lower than the noise volume, the volume measurement means (103) send a signal (interaction 11) to the storage means (104) so that they stop storing the sound that arrives from the sound capture means (101).

Continuing with the explanation of Fig. 2A, the measured voice and noise volume levels are sent (interaction 3) to sound capture selection means (202), in this case implemented in the gateway device (200). When the voice control module (100) is integrated into a system with other control modules, the volume measurement means (103) indicate its identity to the sound capture selection means (202) together with the volume measurements of noise and voice.

The sound capture selection means (202), being able to receive the volume measurements of different voice control modules (100) together with their identity, combine all the information received and select (interaction 4) the voice control module/s (100) that must send the sound captured from the voice identification, to an activation keyword identification means (201), in this case implemented in the gateway device (200).

When voice activity is detected, the voice detection means (102) in addition to notifying it (interaction 2) to the volume measurement means (103), notify it to the storage means (104) (interaction 2') for them to begin to store the sound (digital stream) that arrives from the sound capture means (101), so that it will store all the sound captured until it receives a new indication to stop storing and/or empty the memory.

This notification can come from the voice activity detection means (102), from the volume measurement means (103), or from activation keyword identification means (201), from keywords (301) or from command recognition (302), depending on the end of the user interaction criteria used, for example, a determined overtime since the voice detection, that the volume is lower or equal to the noise level, the non-identification of keywords or no command identification or exceed a certain time between a voice activity identification and the next voice activity identification.

In some preferred embodiments, the storage means (104) include a timer and stop storing the voice when a certain time elapses without the need of receiving any indication. In other preferred embodiments, the voice detection means (102), when not detecting voice and after a certain time, indicate to the storage means to stop storing the sound that arrives.

The voice storage means (104) are configured to, depending on the indication of the sound capture selection means (202), send the stored voice and the stored subsequent sound and the following sound as it arrives, to the activation keyword identification means (201) or delete the stored voice and stop storing and sending the sound that arrives at it.

In cases where the voice control module (100) is selected by the sound capture selection means (202) to send the stored voice, the voice storage means (104) send (interaction 5) to the activation keyword identification means (201) the stored voice and all the stored sound since the voice detection and continues sending the incoming sound. The activation keyword identification means (201) will receive the voice and sound of all the modules that have been selected by the sound capture means (202).

If these activation keyword means (201) identify a certain activation keyword (for example, "Hello Simon") in the detected voice or in the post-voice detection sound, they indicate (interaction 6) to the means voice storage system (104) to send (interaction 7) the stored voice, the stored subsequent sound and to continue sending the sound stream as it arrives, to the keyword identification means (301), in this example of the Fig. 2A implemented in the computing server (300). The activation keyword identification means (201) indicate (interaction 6') the detection of an activation keyword also to the sound capture selection means (202) and the latter will send (interaction 6") the volumes of voice and noise registered in the volume measurement means (103) of the voice control module (100) selected together with their identity to the addressed device determination means (303), in this embodiment of Fig. 2A implemented in a computing server (300), which also receives the voice and noise volumes from other voice control modules (100) together with the corresponding identities.

In some embodiments, the activation keyword identification means (201), in the cases in which they do not identify any activation keyword and a determined time elapses from the voice identification send a signal to the storage means (104) to stop storing and empty the memory.

The keyword identification means (301) allows recognition of a broader set of words and can be implemented, for example, using a speech-to-text conversion service or a more limited functionality capable of recognizing a limited set of words that are correspond to those used in the commands for the system.

The keyword identification (301) allows to identify a word among a set of possible words. Particularly, in the present invention, the recognition of each word is carried out thanks to a sound representation (parameters/characteristics) that feeds a neural network. The sound parameters extraction and the neural network computation can be executed using a CPU, which can be the same or different from the above. The result of this processing is a vector with probabilities. The vector has as many components as there are response options in the neural network. In preferred embodiments, the vector has a number of components equal to the number of words stored in the library and that it is therefore capable of distinguishing and one or two more components, one of them associated with noise and the other associated with unknown words, although both noise and unknown words can be identified with the extra component in cases where only one is recognized plus the number of words that can be recognized.

Each value in the components of the vector represents the estimate that the sound corresponds to the word that represents the position in the vector. In the case of the component that represents unknown words, it represents the estimate that the sound is a word but that it is not included in the library and therefore does not have a specific component assigned in the vector for that word and it can be any word except those that the neural network is able to identify. In the case of the component that represents noise, it represents the estimate that the sound corresponds to a noise and in the cases in which there is only one additional component, it represents the probability of noise or unknown words indistinctly.

Normally the values of the components are probabilities (the sum of all the components is 1) and therefore the component with the highest value is interpreted as the word or noise or unknown word, estimated/inferred by the neural network.

Depending on the available resources, one or more neural networks can be used for the identification of keywords (301) or for the recognition of commands (302). Alternatively, the neural network can be decomposed into two different neural networks, each one trained independently, so that a first network is implemented in the processing unit, which is at least one, of the voice control module/s (100) that have detected voice and this neural network or networks of each voice control module (100) generates a series of values that feed a second network implemented in the gateway device (200) or in some examples, in the computer server (300), which combines all the values received from all the voice control modules (100) to generate a probability vector of the word that is sent to command recognition means (302).

Continuing with the explanations of Fig. 2A, for each word recognized by the keyword identification means (301), a vector is obtained with the probabilities and a time relative to the previous recognized word, that is, the time that elapses between the previous word and the recognized word corresponding to the vector, this time being zero for the first recognized word of the analysed user interaction, considering a user interaction the detected voice and following sound stream since the voice is detected until the voice storage means (104) stop storing and sending the sound stream, for instance, until the voice activity detection means does not identify voice activity and a certain time elapses. In other embodiments, the command recognition means (302) issue the command to empty the memory of the voice storage means (104), when they detect noise or an unknown word and a determined time elapse. The probability vectors and the relative times of the words recognized in the analysed user interaction and the identity of the module to which they correspond are sent (interaction 8) to the command recognition means (302), in this example of Fig. 2A implemented in the computing server (300) to which the voice control module (100) is connected, which relate the set or sequence of words with a determined command following one or more previously defined rules.

For example, the command might simply be "turn on the lights". The voice control module or modules (100) will be able to recognize the following words: "turn on", "the" and "lights" so that the sequence of words defines a command. This recognition can be based, in particular, on a neural network. An example of a neural network that can be used is a CNN (convolutional neural network) (not limiting, since other types of neural networks capable of identifying words would be equally valid). For each of the words or noise a set of results will be generated. In the simplest approach, the neural network will emit a probability vector corresponding to each of the possible words that the voice control module (100) is capable of recognising. In general, the word with the highest probability will be chosen, but more elaborate or complex criteria can be followed. For example, it can be considered that in order to decide on a certain word, its probability, in the probability vector, must be greater than a certain value, for example 0.6. If this value is not reached, it is determined that the word is indeterminate. Otherwise, the word is admitted as valid. A syntax can also be considered that defines the sequences of valid words that define a command and/or the probability vectors of each of the words can be combined in such a way that the one with the highest probability is chosen from all the possible valid combinations. For instance, if the user pronounces "Hello Simon turn on light", the voice control module (100) can generate the following vectors for each word: for the activation keyword "Hello Simon" (0.8, 0, 0, 0.1 , 0, 0.1), for the words "turn on" (0, 0, 0, 1, 0, 0) and for "light" (0, 0.5, 0, 0, 0, 0.5). A simple decision-making system might indicate that it cannot determine the command since it interprets two possible commands with equal probability "Hello Simon turn on light" and "Hello Simon turn on another keyword". Using the syntax the second option could be discarded if for example the other keyword corresponds to the blinds keyword or even seeing that "turns on" has a probability of 1 and that in the third one there are two options tied in probability of the module The voice control unit (100) can decide that what the user has pronounced is "Hello, Simon, turn on the light".

The keyword identification means (301), when a certain time is exceeded from the recognition of the previous word (or from the voice recognition in cases in which no word is recognized), generate a vector wherein the greatest probability will be in the coefficient corresponding to noise or to an unknown word, as appropriate, in the embodiments wherein the noise from the words not included in the library is distinguished or in the coefficient corresponding to noise in the embodiments in which both the noise and the unrecognized words are identified in the same way.

The command recognition means (302) as a function of the vector/s and the times between received words or noises determine an identified command or an error in cases in which the set or sequence of words could not be identified with one of the determined commands.

This error identification also occurs when the command recognition means (302) receive a vector indicating a higher probability of noise or unknown word, then it issues the order (interaction 9) to the storage means (104) to empty the memory and/or stop storing and sending the sound that is pending to be sent. In some embodiments, the vectors with the highest probability of noise and/or unknown word can also be associated with the time elapsed since the identification of the previous word and the command recognition means (302) issue the command to empty the memory and/or the cessation of storage and sending of sound to the storage means (104) when the time associated with the vector is greater than a determined time. In systems wherein there is more than one voice control module (100) the memory emptying command is sent to the storage means (104) of all the modules that were selected by the sound capture selection means (202) to send the stored sound to the keyword identification means (301).

In the case where the command recognition means (302) determines an identified command it also determines whether the command is complete or incomplete. In some cases in which the command is considered complete, the command recognition means (302) issue (interaction 9') an order to command execution means (500), which can be an electric load/s or an interface (for example, an API) that controls an electric load/s or electronic devices, for example, it can be a switch, or the control interface of an air conditioning/heating system.

In other examples, the command recognition means (302) may determine that the command, although it corresponds to a particular command in the stored library, is not fully defined. In these cases, the command recognition means (302) for determining which apparatus/device has to execute the command can establish that it is necessary to use some additional context. If this is the case, the determined command (together with the identity of the module or modules from which it comes) is sent (interaction 9") to the addressed device determination means (303), in this case implemented in the computer server (300) to which the voice control module connects. This function also receives (interaction 6") the information from the sound capture selection means (202), that is, it receives the levels of volume of voice and noise measured by the voice control module or modules (100) selected by the sound capture selection means (202) together with the identity of the voice control module (100) from which each measurement comes. The combination of these data gives information about the context of the command, that is, the location of the source of the command or the direction in which it has been issued, helps to define the final command, for example, by measuring the volumes of the words and the comparison with the volumes registered in several voice control modules, it can be determined that a user is issuing the command to a certain voice control module because it is closer to the user or because it receives a greater volume and clarity or probability percentage in the words identified when the user issues the command directed towards the voice control module and facing it. Once the command is completely defined and the addressed device determination means (303) have identified the order of the command, that is, the action and to which devices or apparatus the action is directed, it is sent (interaction 10) to the command execution means (500). For instance, when determining the context of the command, if the user is in a space and pronounces "turn on the lights" it will proceed to turn on all the lights defined in that space where the voice control module is, in return if he pronounces "turn on the light" the light closest to the user's location will be turned on.

Depending on the architecture used, there are several options for implementing the aforementioned command execution means (500). For example, in the event that the system uses or includes a computer server (300), once the order of the command has been identified, it can instruct to the electrical load/s or electronic device/s, or even the voice control module or modules (100), to carry out the action (for example, turning a light on or off, raising or lowering a blind, etc.). Alternatively, if the system does not use or include any cloud services, the command can be sent directly to the electrical load/s or electrical device/s, or even to the voice control module o or modules (100).

In a preferred embodiment, as shown in Fig. 2B, the storage media 104 has the ability to compress sound. This capability is advantageous in embodiments where the voice control module (100) connects to a gateway device (200) and/or a computing server (300) and is especially advantageous in embodiments where a WiFi network is used for communications between the voice control module (100) and the gateway device (200). In these embodiments, an access point, between the voice control module (100) and the gateway device (200), receives the sound and sends it to a router that connects to a computing server (300) located in the cloud, in such a way that the traffic required to send the sound in digital format and with quality is doubled.

The storage means (104) of these embodiments, through the compression capacity (104') generate a parametric representation of the sound that arrives from the sound capture means (101) (using a series of filters and/or certain transformations), stores them and sends them to the activation keyword identification means (201) of the gateway device (200). In these embodiments the storage means (104) transmit the generated and stored representations instead of the sound stream in digital format, to both, the means located in the gateway device (200) and to those located in the computing server (300). The other interactions are identical to those described in Fig. 2A. Depending on the type of algorithms used to obtain the sound representations (MFE, MFCC...) the volume of traffic can be reduced to a greater or lesser extent, being able to reach an order of magnitude, without losing quality and without the need to increase the processing units of the voice control module (100) or of the devices or servers to which it is connected.

In some embodiments, the storage means (104) through the compression capability (104') simply compress the sound for storage and transmission. However, these embodiments are less preferred because they require larger processing units to perform the compression and decompression of the sound.

In another embodiment, illustrated in Fig. 3, the voice activity means (102) do not detect only voice, but are able to distinguish activation keywords, that is, the voice control module (100) Instead of comprising means for detecting voice activity, it comprises preliminary activation keywords identification means (102'). In these embodiment examples, instead of identifying voice, activation keywords are identified (for instance "Hello Simon") and when the determination of the activation keyword/s occurs, all other interactions are performed in the same way as in the embodiment of Fig. 2A, including the activation keyword identification (201) which in this case is a confirmation activation keyword identification (201') that is performed in the gateway device and that in other non-illustrated embodiments, it can be performed on a server located in the cloud. This confirmation activation keyword identification (201') compares the received keyword and the sound that follows it, with the keywords that it is capable of identifying, indicating detection of the activation keyword to the storage means (104) for sending the keyword and the following sound to the keyword identification means (301) (interaction 7) and also indicating the activation keyword detection (interaction 6) to the sound capture selection means (202) to determine the module/s that must send the volumes of voice and noise (interaction 6") to the addressed device determination means (303). Particularly, the determination of the command and the context thereof, if necessary, are also performed as in the embodiment of Fig. 2A. The identification threshold of the preliminary activation keyword identification means (102') is lower than the threshold of the confirmation activation keyword identification means (201') so that there are no false negatives of identification of preliminary activation keyword (102') but there may be false positives that are filtered and confirmed by the confirmation activation keyword identification means (201').

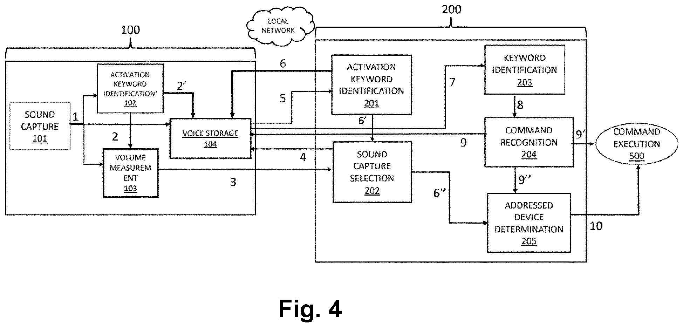

In another embodiment, illustrated in Fig. 4, the system is made up solely of the voice control module or modules (100) and the gateway device (200). That is to say, the system does not use or does not include any computer server (300) and the communications are within a local network. In this case the functionalities/means (301, 302, 303) described above that were performed in a computing server are implemented in the gateway device (200). Therefore, the keyword identification (203), the command recognition (204) and the addressed device determination (205) means are implemented in a gateway device. The interactions between the means/functionalities in these embodiments are the same as those described in the embodiments of Figs. 2A and 3, with the difference that the keyword identification (203) and command recognition (204) means will be able to identify a smaller number of keywords and commands by having a program code and CPU storage capacity smaller.

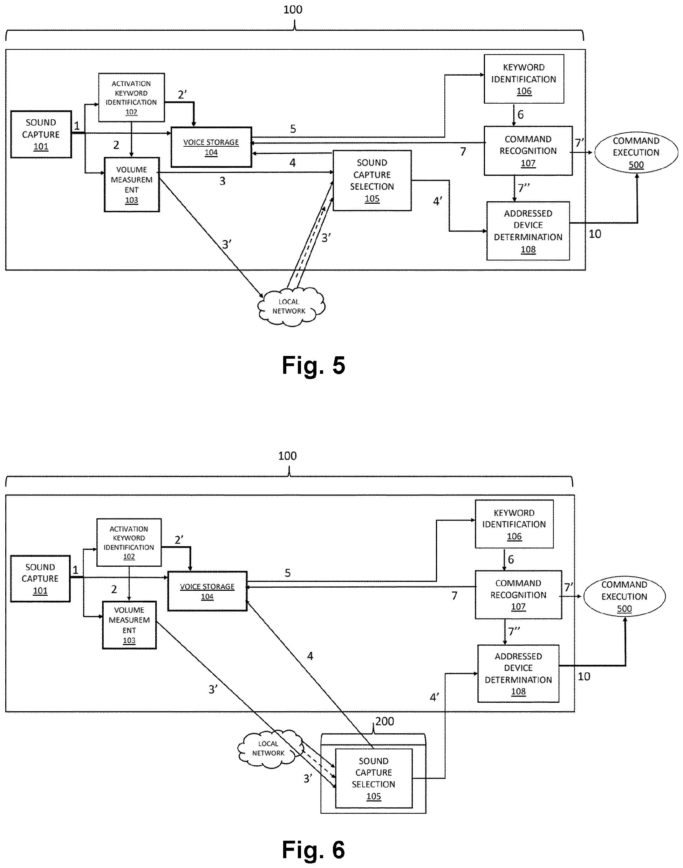

In another embodiment example illustrated in Figs. 5 and 6 the functionalities/means (202, 301, 302, 303) described in Fig. 2 are implemented in the voice control module (100) without the need for a gateway device (200) or computer server (300).

In these embodiments, the voice control module (100) can be implemented in a system made up of several voice control modules (100) interconnected with each other through a local network and can be arranged in electrical devices that comprise electrical load/s such as switches, luminaires, blind motors or in electronic devices such as household appliances, lighting systems, access control systems, etc. of a home, space or office. Each voice control module (100) can include the functionality or activation keyword identification means (102) in the voice control module (100) itself, being able to detect an activation keyword although this functionality may be dispensable. Each voice control module can comprise the means or functionalities for identifying keywords or commands, by means of at least one processing unit that compares the captured sound with a library of keywords or short commands.

In the embodiments of Figs. 5 and 6, as in those of Fig. 3 or 4, the identification of the keyword is communicated to the voice storage means (104) so that it stores the keyword/voice and the following sound that reaches it. The identification of the activation keyword is also communicated to the volume measurement means (103) which measure and store the volume of the noise, of the activation keyword and of the following incoming sound and send the measurements together with the identity of the voice control module as a broadcast or multicast communication using, for instance, a WiFi network, to the sound capture selection means (105) of voice control modules within the range of the broadcast/multicast network. In some embodiments a small random delay may be applied to the transmission to avoid transmission timings that cause collisions. In the cases in which the voice control module (100) is implemented in a system of several voice control modules, a sound capture selection means (105) will receive the volume levels of noise and activation key detected together with the identity of the voice control module (100), of the voice control module/s that have identified the activation keyword. These sound capture means (105) can be implemented in each voice control module (100) as illustrated in Fig. 5 or they can be implemented in a gateway device (200) that combines the information that comes from volume levels together with identities of the different voice control modules (100), as illustrated in Fig. 6.

In the embodiments of Fig. 5 in which the voice control module (100) is integrated into a system with other voice control modules (100), the sound capture means (105) receive (interaction 3) noise and voice volume levels. In this case, the voice volume corresponds to the volume of the activation keyword or short command detected in the activation keyword identification means (102) and the noise volume, like in the embodiments of the Figs. 1 to 4, corresponds to the last sound volume measurement before voice detection or an average of the last volume measurements before voice detection. The sound capture means (105) also receive (interaction 3') the noise and voice volume levels from other voice control modules (100) along with their corresponding identity.

In the cases in which the sound capture means (105) do not receive the noise and voice volume levels of the voice control module (100) in which they are implemented, all the volume levels and identities of other modules voice control (100) of the system will be ignored. Otherwise, if the noise and voice volume levels reach it and therefore the activation keyword has been detected in the voice control module (100) in which the sound capture selection means (105) is implemented, these sound capture selection means (105) will store the information waiting for other packets of noise and voice volume measurements and identities from other voice control modules (100) to arrive. After a waiting time has elapsed, the sound capture selection means (105) compares the voice volume levels and selects the highest one, then verifies that the noise volume is less than a certain threshold, if so, the voice control module with the identity corresponding to the highest volume will be the one selected, if the noise volume exceeds the determined threshold, then the noise volume of the next voice control module with the highest voice or activation keyword volume will be evaluated, until the noise volume is below the set level. The sound capture means (105) identify the identity of the voice control module (100) that has registered the highest voice volume, with a noise level below the determined threshold, when this identity is that of the control module (100) in which the sound capture means (105) is implemented, it means that this voice control module (100) is the one selected to continue analysing the sound to determine if there is a command and if it sends one or more execution orders. All the voice control modules (100) have the same information and they all run the same algorithm, so they all should make the same decision.

In the cases in which the identity of the selected volumes corresponds to another voice control module (100), the sound capture means (105) send (interaction 4) a signal to the voice storage means (104) to empty the memory and stop storing the sound that reaches them from the sound capture means (101).

In the cases in which the voice control module (100) in which the sound capture means (105) are implemented corresponds to the identity associated with the highest volume of voice with a noise level below a certain threshold, the sound capture means (105) store and send (interaction 4') the voice and noise volume information and associated identity of all the voice control modules (100) that have arrived in addition to the same information from the module in which it is implemented, to a addressed device determination means (108). The sound capture means (105) also send a signal (interaction 4) to the voice storage means (104) so that these send (interaction 5) the activation keyword and the following stored sound and the sound as it reaches it, to the keyword identification means (106) which, like the keyword identification means (301, 203) in the examples of Figs. 2A, 2B, 3 and 4 allow the identification of a greater number of words, they obtain a vector with the probabilities and a time relative to the previous word recognized as explained in the embodiment example of Fig. 2A, which is sent (interaction 6) to the command recognition means (107) that associate the set or sequence of words with a determined command following one or more previously defined rules, like in the example of realization of the command recognition means (302 ) of Fig. 2A, the command recognition means (107) in the event that it does not identify the command, sends (interaction 7) to the voice storage means (104) a signal to empty the memory. In the case where the command recognition means (107) determines an identified command, it also determines whether the command is complete or incomplete. In the cases in which the command is considered complete, the command recognition means (107) issue (interaction 7') an order to command execution means (500).

Also as in the example of Fig. 2A, in cases where the command recognition means 107 of the embodiment of Fig. 5 determines that the identified command is incomplete, the determined command is sent (interaction 7") to the addressed device determination means (108), these means receive (interaction 4') the information from the sound capture means (105), that is to say the levels of voice and noise volume captured with the identity of each voice control module (100) and by computing this information, like the addressed device determination means (303) of the embodiment of Fig. 2A, generates a completely defined command, identifying the order of the command, that is to say the action and to which devices or apparatus the action is directed and this is sent (interaction 10) to the command execution means (500).

In other words, addressed device determination means (108) will select the voice control module that must send the corresponding command execution order for the activation of the electric load/s or electronic device that the user wants to activate. This decision will be based on the provided order which can specify an individual device such as "turn on the kitchen light", a device signalled by the user's voice saying "turn on light" or all lights in a room or area of a room saying "turn on the lights" when talking to one or more electrical devices in the area. The one or those who obtain the best score will take control to execute the order by means of the command execution means (500).

Multicast or broadcast communication on a WiFi network is prone to packet loss, since no retransmission mechanisms are used at the link layer. These losses can cause that not all the voice control modules (100) have all the information and, as a consequence, make different decisions. To avoid this problem, the voice control modules (100) that have self-selected as a target will broadcast their decision, including the list of voice control modules (100) that have provided information and indicators to support their decision. If a self-selected voice control module (100) receives a message from another module, also self-selected, it will analyse the information and make the decision to execute the order or leave the responsibility to any other self-selected voice control module (100). This approach will solve the problem that a voice control module (100) loses an information packet from a higher scoring voice control module (100).

In the embodiment shown in Fig. 6 this problem of information loss in multicast or broadcasts over WiFi networks is also avoided. In this embodiment, the sound capture selection means (105) are implemented in a gateway device (200) external to the voice control module (100) and shared with other voice control modules (100) that make up a distributed system. This sound capture selection means (105) of the embodiment of Fig. 6 receives the voice and noise volumes and identities of the voice control modules (100) of the distributed system that have detected the keyword, with the difference being that the sound capture selection means (105) do not share identity with any voice control module (100) and are implemented in another device, for example, a gateway device (200). In other embodiments not shown, the sound capture selection means (105) are implemented in a computing server (300).

These sound capture selection means (105) select the highest voice volume with a noise level below the determined threshold and communicate (interaction 4) to the voice storage means (104) of the voice control module of the identity corresponding to the selected volume or the modules in case there are more than one with the same volume values, sending (interaction 5) the activation keyword and following sound to the keyword identification means (106) .

In a preferred embodiment of Fig. 6, the voice control modules (100) that do not receive the signal from the sound capture selection means (105) after a certain time, empty the memory of the voice storage means (104) and these do not send the sound that reaches it to the keyword identification means (106).

In another preferred embodiment of Fig. 6, the voice control modules (100) not selected to send the keyword and following sound, receive (interaction 4) a signal from the sound capture selection means (105) indicating to the voice storage means (104) emptying the memory and not sending the sound that reaches it to the keyword identification means (106).

The proposed voice control module (100) of any of the described embodiments may also include one or more LEDs that will light upon recognition of the activation keyword or command.

The proposed invention may be implemented in hardware, software, firmware, or any combination thereof. If implemented in software, the functions may be stored on a computer or encoded as one or more instructions or code on a computer-readable medium.

The scope of the present invention is defined in the appended claims.

## Claims

1. Voice control system, comprising at least two modules provided with communication means, wherein at least one of the modules is a voice control module comprising:
- sound capture means (101) including at least one microphone for continuously capturing sound;
- one or more processing units, configured to:
analyse the captured sound and identify if it corresponds to noise and/or voice, , wherein the voice includes a vocal activity, a keyword and/or a command; and,
in response to each identification, measuring a volume of the identified voice and/or identified noise;
- storage means (104) configured to store, at least temporarily, the captured sound, the identified voice and/or the identified noise;
and where the system is configured to determine a command from the voice identifications and determine the electrical load/s or electronic device to which the command is directed from:
- the volume measurements;
- the given command; and
- the voice and/or noise identifications of the modules.

2. The voice control system according to the preceding claim, further comprising sound capture selection means (202, 105) and activation keyword identification means (201, 102), the sound capture selection means ( 202, 105) being configured to process the volumes of the captured sound or the identified voice and/or the identified noise coming from the modules and select one or more module/s that should send the captured sound or the identified voice and/or the noise identified to an activation keyword identification means (201, 105) which processes the incoming sound and determines whether it contains an activation keyword to activate the command determination and the determination of the electric load/s or the electronic device to which the command is directed.

3. The voice control system according to any of the preceding claims, further comprising:
- a keyword identification means (301, 203) that receives the captured sound of the selected module/s and processes and compares it with a library of keywords to identify keywords in the captured sound; and
- command recognition means (302, 204), which process the words identified by the keyword identification means (301, 302) and generate a command directed to the electrical load/s or electronic device.

4. The voice control system according to claim 3, further comprising addressed device determination means (303, 205) which process the volumes of the one or more modules and the command recognized by the command recognition means (302, 204) and completes the command with the determination of the electrical load/s or the electronic device that must carry out the command.

5. The voice control system according to any of the preceding claims, further comprising a gateway device (200) where the functions of the activation keyword identification means (201) and the capture selection means (202) are executed.

6. The voice control system according to claim 5, wherein the functions of the keyword identification (203), command recognition (204) and addressed device determination (205) means are also executed on the gateway device (200).

7. The voice control system according to claim 5, further comprising a computer server (300) wherein the functions of the keyword identification (301), command recognition (302) and addressed device determination (303) means are executed.

8. The voice control system according to any of the preceding claims, wherein the identification of the keyword is carried out by executing at least one neural network.

9. The voice control system according to any of the preceding claims, wherein the storage means (104) are further configured to compress the captured sound or identified voice and/or identified noise.

10. The voice control system according to claim 4, wherein the functions of the keyword identification (106) and activation keywords (102), command recognition (107) and addressed device determination (108) means are executed in the at least one processing unit of the at least one voice control module (100) of the system.

11. The voice control system according to claim 11, wherein the sound capture selection means (105) are executed in the at least one voice control module (100) of the system or are executed in a gateway device (200).

12. The voice control system according to any of the preceding claims, wherein the processing unit identifies activation keywords instead of identifying voice.

13. The voice control system according to any of the preceding claims, wherein the processing unit/s can be common to more than one voice control module (100).

14. A voice control module (100) comprising:
- sound capture means (101) including at least one microphone for continuously capturing sound;
- one or more processing units configured to analyse the captured sound and identify if it corresponds to noise and/or voice, where the voice includes a vocal activity, a keyword and/or a command; and in response to each identification measuring a volume of the identified voice and/or identified noise;
- storage means (104) configured to store, at least temporarily, the captured sound or the identified voice and/or the identified noise;
- means of communication with the voice control system of any of claims 1 to 13.

15. The voice control module (100) according to claim 13 installed in an electrical device that can be an electrical switch, a dimmer, a lighting element, a temperature regulator, a blind or a blind switch.
